# EUROPEAN PATENT APPLICATION

(11) **EP 3 849 256 A1**
(43) Date of publication of application: **14.07.2021**
(21) Application number: 18932542.6
(22) Date of filing: 07.09.2018
(51) Int. Cl.: H04W 72/04

(54) **USER TERMINAL AND WIRELESS COMMUNICATION METHOD**

(71) Applicant: NTT DOCOMO, INC., Chiyoda-ku Tokyo 100-6150 (JP)
(72) Inventor: YOSHIOKA, Shohei, Tokyo 100-6150 (JP); TAKEDA, Kazuki, Tokyo 100-6150 (JP); NAGATA, Satoshi, Tokyo 100-6150 (JP); WANG, Lihui, Beijing 100190 (CN)
(74) Representative: Hoffmann Eitle
(86) International application number: PCT/JP2018/033294
(87) International publication number: WO 2020/049736

(57) **Abstract**

User terminal according to one aspect of the present disclosure includes a transmitting section that transmits at least one of channel state information and a sounding reference signal, and a control section that controls transmission of at least one of the channel state information and the sounding reference signal based on information other than existing trigger information regarding at least one of the channel state information and the sounding reference signal. According to one aspect of the present disclosure, it is possible to suppress deterioration in communication throughput caused by trigger of at least one of the channel state information and the sounding reference signal.

## Description

### Technical Field

The present disclosure relates to user terminal and a radio communication method in a next-generation mobile communication system.

### Background Art

In a universal mobile telecommunications system (UMTS) network, long term evolution (LTE) has been specified for the purpose of realizing a higher speed data rate, lower delay and the like (refer to Non-Patent Literature 1). Furthermore, LTE-advanced (LTE-A, LTE Rel. 10 to 14) has been specified for the purpose of realizing a higher capacity and development in LTE (LTE Rel. 8 and 9).

LTE successor systems (for example, also called as future radio access (FRA), 5th generation mobile communication system (5G), 5G plus (+), new radio (NR), new radio access (NX), future generation radio access (FX), and LTE Rel. 15 or later) are also under study.

In an existing LTE system (for example, LTE Rel. 8 to 14), there is a case where user terminal (UE) transmits to a base station at least one of channel state information (CSI) and a sounding reference signal (SRS) in order to grasp a channel state.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In a future radio communication system (for example, NR), the technical problem is when and how to trigger at least one of channel state information and sounding reference signal. For example, if at least one of the channel state information and sounding reference signal cannot be quickly triggered, communication throughput might be deteriorated.

Therefore, an object of the present disclosure is to provide user terminal and a radio communication method capable of suppressing deterioration in communication throughput caused by trigger of at least one of the channel state information and sounding reference signal.

### Solution to Problem

User terminal according to one aspect of the present disclosure includes a transmitting section that transmits at least one of channel state information and a sounding reference signal, and a control section that controls transmission of at least one of the channel state information and the sounding reference signal based on information other than existing trigger information regarding at least one of the channel state information and the sounding reference signal.

### Advantageous Effects of Invention

According to one aspect of the present disclosure, it is possible to provide user terminal and a radio communication method capable of suppressing deterioration in communication throughput caused by trigger of at least one of channel state information and a sounding reference signal.

### Brief Description of Drawings

Figs. 1A to 1C are conceptual diagrams illustrating an example of triggering of A-CSI reporting based on a PUCCH resource identifier.
Figs. 2A to 2C are first conceptual diagrams illustrating an example of triggering of A-SRS transmission based on the PUCCH resource identifier.
Figs. 3A to 3C are second conceptual diagrams illustrating an example of triggering of the A-SRS transmission based on the PUCCH resource identifier.
Fig. 4 is a view illustrating an example of a schematic configuration of a radio communication system according to one embodiment.
Fig. 5 is a view illustrating an example of an overall configuration of a base station according to one embodiment.
Fig. 6 is a view illustrating an example of a functional configuration of the base station according to one embodiment.
Fig. 7 is a view illustrating an example of an overall configuration of user terminal according to one embodiment.
Fig. 8 is a view illustrating an example of a functional configuration of the user terminal according to one embodiment.
Fig. 9 is a view illustrating an example of a hardware configuration of the base station and user terminal according to one embodiment.

### Description of Embodiments

In a future radio communication system (for example, 3rd Generation Partnership Project (3GPP) Rel. 16 or later, 5G, 5G+, and new radio (NR)), it is studied that user terminal (user equipment) (UE) transmits to a base station at least one of channel state information (CSI) and a sounding reference signal (SRS) in order to grasp a channel state.

For example, in the NR, the UE measures the channel state using a given reference signal (or a resource for the reference signal), and feeds back (reports) the channel state information (CSI) to the base station.

The UE may measure the channel state using a channel state information reference signal (CSI-RS), a synchronization signal/physical broadcast channel (SS/PBCH) block, a synchronization signal (SS), a demodulation reference signal (DMRS) and the like.

A CSI-RS resource may include at least one of non zero power (NZP) CSI-RS and CSI-interference management (IM). The SS/PBCH block is a block including the synchronization signal (for example, a primary synchronization signal (PSS), a secondary synchronization signal (SSS), and PBCH (and corresponding DMRS), and may also be called as an SS block (SSB) and the like.

Note that the CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), layer 1 reference signal received power (L1-RSRP), reference signal received quality (L1-RSRQ), a signal to interference plus noise ratio (L1-SINR), a signal to noise ratio (L1-SNR) and the like.

The CSI may include a plurality of parts. A CSI part 1 may include information with a relatively small number of bits (for example, the RI). A CSI part 2 may include information with a relatively large number of bits (for example, the CQI) such as information determined based on the CSI part 1.

As a method of feeding back the CSI, periodic CSI (P-CSI) reporting, aperiodic CSI (A-CSI) reporting, semi-persistent CSI (SP-CSI) reporting and the like are under study.

The UE may be notified of CSI measurement configuration information (for example, an RRC information element "CSI-MeasConfig") using higher layer signaling, physical layer signaling, or a combination of them.

In the present disclosure, the higher layer signaling may be, for example, any one of radio resource control (RRC) signaling, medium access control (MAC) signaling, broadcast information and the like, or a combination of them.

For the MAC signaling, for example, a MAC control element (MAC CE), a MAC protocol data unit (PDU) and the like may be used. The broadcast information may be, for example, a master information block (MIB), a system information block (SIB), a remaining minimum system information (RMSI), other system information (OSI) and the like.

The physical layer signaling may be, for example, downlink control information (DCI).

The CSI measurement configuration information may include CSI resource configuration information (an RRC information element "CSI-ResourceConfig"), CSI reporting configuration information (an RRC information element "CSI-ReportConfig") and the like.

The CSI resource configuration information may include information for identifying a resource to be measured (for example, a CSI-RS resource set ID, an SSB resource set ID and the like).

The CSI reporting configuration information may include at least one of a reporting configuration ID (CSI-ReportConfigId), a reporting type (for example, the P-CSI reporting, A-CSI reporting, SP-CSI reporting on a physical uplink control channel (PUCCH), SP-CSI reporting on a physical uplink shared channel (PUSCH) and the like), reporting periodicity (ReportPeriodicity), an offset (ReportSlotOffset), information on which reference signal (or resource) is used to report the measured CSI (CSI-ResourceConfigId) and the like.

The SP-CSI reporting using the PUCCH (PUCCH-based SP-CSI reporting) may be activated by the MAC CE. The SP-CSI reporting using the PUSCH (PUSCH-based SP-CSI reporting), the A-CSI reporting using the PUSCH and the like may be activated (or triggered) by the DCI.

For example, a CSI request field included in the DCI may specify a trigger state. The trigger state may be configured by the higher layer signaling (for example, RRC signaling). A list of trigger states for the A-CSI reporting may be configured by an RRC information element "CSI-AperiodicTriggerStateList", and a list of trigger states for the SP-CSI reporting may be configured by an RRC information element "CSI-SemiPersistentOnPUSCH-TriggerStateList". Each trigger state may be associated with one or a plurality of reporting configuration IDs (CSI-ReportConfigId) and the like.

In the NR, a sounding reference signal (SRS) has a wide range of usages. The SRS of the NR is used not only for UL CSI measurement also used in existing LTE (LTE Rel. 8 to 14) but also for downlink (DL) CSI measurement, beam management and the like.

In the UE, one or a plurality of SRS resources may be configured. The SRS resource may be identified by an SRS resource index (SRI).

Each SRS resource may include one or a plurality of SRS ports (may correspond to one or a plurality of SRS ports). For example, the number of ports of each SRS may be one, two, four and the like.

In the UE, one or a plurality of SRS resource sets may be configured. One SRS resource set may be associated with a given number of SRS resources. The UE may commonly use a higher layer parameter for the SRS resources included in one SRS resource set. Note that, in the present disclosure, the resource set may be read as a resource group, simply a group and the like.

Information regarding the SRS resource set and/or SRS resource may be configured in the UE using the higher layer signaling, physical layer signaling, or a combination of them.

The SRS configuration information (for example, an RRC information element "SRS-Config") may include SRS resource set configuration information, SRS resource configuration information and the like.

The SRS resource set configuration information (for example, an RRC parameter "SRS-ResourceSet") may include information on an SRS resource set identifier (ID) (SRS-ResourceSetId), a list of SRS resource IDs (SRS-ResourceId) used in the resource set, an SRS resource type, and SRS usage.

Herein, the SRS resource type may indicate any one of a periodic SRS (P-SRS), a semi-persistent SRS (SP-SRS), and an aperiodic SRS (A-SRS). Note that the UE may transmit the P-SRS and SP-SRS periodically (or periodically after activation). Furthermore, the UE may transmit the A-SRS based on an SRS request field in the DCI.

The SRS resource configuration information (for example, an RRC parameter "SRS-Resource") may include an SRS resource ID (SRS-ResourceId), the number of SRS ports, an SRS port number, transmission Comb, and SRS resource mapping (for example, time and/or frequency resource position, resource offset, resource periodicity, the number of repeats, the number of SRS symbols, an SRS bandwidth and the like), hopping related information, the SRS resource type, a sequence ID, spatial relation information and the like.

The UE may transmit the SRS in adjacent symbols as many as the SRS symbols out of last six symbols in one slot. Note that the number of SRS symbols may be one, two, four and the like.

The UE may switch a bandwidth part (BWP) to transmit the SRS for each slot, or may switch an antenna. Furthermore, the UE may apply at least one of in-slot hopping and inter-slot hopping to the SRS transmission.

By the way, in the NR, introduction of ultra-reliable and low-latency services (for example, ultra reliable and low latency communications (URLLC) related service (URLLC service)) is under study. As a use case of the URLLC service, a communication service that requires at least one of high reliability (high accuracy) and low latency (for example, communication in plant, hospital and the like) is assumed.

It is pointed out that a PDCCH might be a bottleneck in performance of DL URLLC. This is because both the DCI for scheduling DL data (PDSCH) and the DCI for scheduling UL data (PUSCH) are transmitted using the PDCCH.

Note that the DCI for scheduling the PDSCH may be called as DL DCI, DL assignment and the like. The DCI for scheduling the PUSCH may be called as UL DCI, UL grant and the like.

As the DL assignment, a plurality of DCI formats (DCI format 1_0, DCI format 1_1 and the like) having different contents, payload sizes and the like may be defined. As the UL grant, a plurality of DCI formats (DCI format 0_0, DCI format 0_1 and the like) having different contents, payload sizes and the like may be defined.

Furthermore, in the NR, it has been studied so far that the CSI reporting and SRS transmission by the UE are triggered using the UL grant (for example, the DCI format 0_1) .

It is also studied to schedule to transmit the A-CSI reporting on the PUSCH not including uplink data (UL-SCH) using the UL grant.

On the other hand, in the URLLC, it is required to rapidly grasp an appropriate channel state for switching to an appropriate modulation and coding scheme (MCS) for retransmission after at least one erroneous detection of the PDSCH and PUSCH occurs. This rapid grasp of the channel state is expected to be performed using the A-CSI reporting or A-SRS transmission.

However, if the A-CSI reporting or A-SRS transmission is triggered after the base station receives NACK for the PDSCH or erroneously detects the PUSCH, it takes a relatively long time to measure the channel state and rapid MCS selection might be insufficient.

Furthermore, given that the PDCCH might be the bottleneck as in the URLLC described above, it lacks flexibility if the A-CSI reporting or A-SRS transmission is triggered only by the UL grant including existing trigger information regarding the CSI or SRS.

Note that the "existing trigger information regarding the CSI or SRS" is, for example, the request field (CSI request field and SRS request field) included in the DCI, and may mean, so to speak, dedicated information (field) for triggering the CSI (for example, A-CSI) reporting or SRS (for example, A-SRS) transmission.

As described above, communication throughput might be deteriorated by using control based on the existing CSI/SRS trigger.

Therefore, the inventors of the present invention conceived of controlling the CSI (A-CSI) reporting or SRS (A-SRS) transmission independent from the existing trigger information regarding the CSI or SRS (for example, based on information other than the existing trigger information). This makes it possible to achieve at least one of rapid triggering and decrease in signaling overhead.

According to one aspect of the present disclosure, it is possible to trigger the A-CSI together with the DL data scheduling using the DL assignment. The UE may transmit the A-CSI triggered by the DL assignment using the PUCCH.

Hereinafter, embodiments according to the present disclosure are described in detail with reference to the drawings. A radio communication method according to each embodiment may be applied independently, or may be applied in combination with others.

Note that, in the following description of the embodiments, the channel state information (CSI) and sounding reference signal (SRS) may be read as each other. For example, even if it is simply described as "CSI", this may include "SRS", and conversely, even if it is simply described as "SRS", this may include "CSI". Furthermore, even if it is described as "CSI and SRS" (or "A-CSI and A-SRS"), it is also possible that only one of them is included.

Note that in the following description of the embodiments, the aperiodic CSI (A-CSI) and aperiodic SRS (A-SRS) may be read as other CSI and SRS, for example, as the periodic CSI (P-CSI) and periodic SRS (P-SRS), and as the semi-persistent CSI (SP-CSI) and semi-persistent SRS (SP-SRS), respectively. Furthermore, the A-CSI reporting in the following description of the embodiments may be read as the A-CSI reporting using the PUCCH (A-CSI reporting on PUCCH).

### (Radio Communication Method)

### <Aspect 1-1>

The UE may use the DL DCI (for example, at least one of the DCI format 1_0 and DCI format 1_1) to control (trigger) the A-CSI reporting and A-SRS transmission. By using not the DCI format 0_0 and DCI format 0_1 of the UL DCI but the DCI format 1_0 and DCI format 1_1 of the DL DCI, it is possible to achieve the rapid triggering of the A-CSI reporting and A-SRS transmission and the decrease in signaling overhead.

### <Aspect 1-2>

The UE may use the DCI format for scheduling URLLC PDSCH (for example, at least one of a compact DCI format and a new DCI format for the URLLC PDSCH) to control (trigger) the A-CSI reporting and A-SRS transmission. Herein, a size of at least one of the compact DCI format and new DCI format may be made the same as or smaller than that of the DCI format 1_0. By using the DCI format for scheduling the URLLC PDSCH, it is possible to achieve the rapid triggering of the A-CSI reporting and A-SRS transmission and the decrease in signaling overhead.

### <Aspects 1-3>

The UE may use at least one of an extended group common DCI and a new group common DCI to control (trigger) the A-CSI reporting and A-SRS transmission. Herein, the extended group common DCI may be extended based on at least one of a DCI format 2_1, a DCI format 2_2, and a DCI format 2_3 of the DL DCI. By using the extended group common DCI and new group common DCI, it is possible to achieve the rapid triggering of the A-CSI reporting and A-SRS transmission and the decrease in signaling overhead.

### <Aspect 2-1>

The UE may use information indicating a PUCCH resource to control (trigger) the A-CSI reporting and A-SRS transmission. The UE may transmit at least one of the A-CSI and A-SRS using a resource determined by the information indicating the PUCCH resource. In this case, the UE may transmit at least one of the A-CSI and A-SRS using the PUCCH.

The information indicating the PUCCH resource may be, for example, a PUCCH resource identifier included in the DCI. In this case, the DCI does not have to include the request field (CSI request field, SRS request field and the like) being the dedicated information provided only for triggering the A-CSI reporting and A-SRS transmission.

Note that the UE may transmit hybrid automatic repeat request acknowledgement (HARQ-ACK) to the URLLC PDSCH together with the A-CSI reporting and A-SRS transmission based on the PUCCH resource identifier.

The UE may also determine whether the DCI including the PUCCH resource identifier is the DCI regarding the scheduling of the URLLC PDSCH, for example, based on a radio network temporary identifier (RNTI) that scrambles a cyclic redundancy check (CRC) assigned to the DCI or based on the fact that an MCS table for the URLLC is specified by the DCI.

The UE may determine one PUCCH resource set out of a plurality of PUCCH resource sets based on a size of uplink control information (UCI) to be transmitted. The UE may determine at least one of the PUCCH resources included in the determined PUCCH resource set based on the PUCCH resource identifier instructed by the DCI, and transmit the UCI using the determined resource.

Herein, the UCI may include any one of the HARQ-ACK, scheduling request (SR) (positive SR and negative SR), CSI, CSI part 1, CSI part 2, and CSI reporting type (for example, P-CSI reporting, A-CSI reporting, and SP-CSI reporting) or a combination of them.

Furthermore, based on a "timing instruction field from PDSCH to HARQ (HARQ feedback timing information, PDSCH-to-HARQ-timing-indicator field)" included in the DCI for scheduling the PDSCH, the UE may transmit the HARQ-ACK corresponding to the PDSCH in the PUCCH in a slot n+k with reference to a slot n including a final symbol of the PDSCH. Note that k may be, for example, an integer from 1 to 8 or may be configured in the UE by the higher layer signaling.

Hereinafter, an example in which the UE performs the A-CSI reporting and A-SRS transmission based on the PUCCH resource identifier is described, in which the PUCCH resource identifier may be read as information indicating an arbitrary PUCCH resource.

### <Aspect 2-1-1>

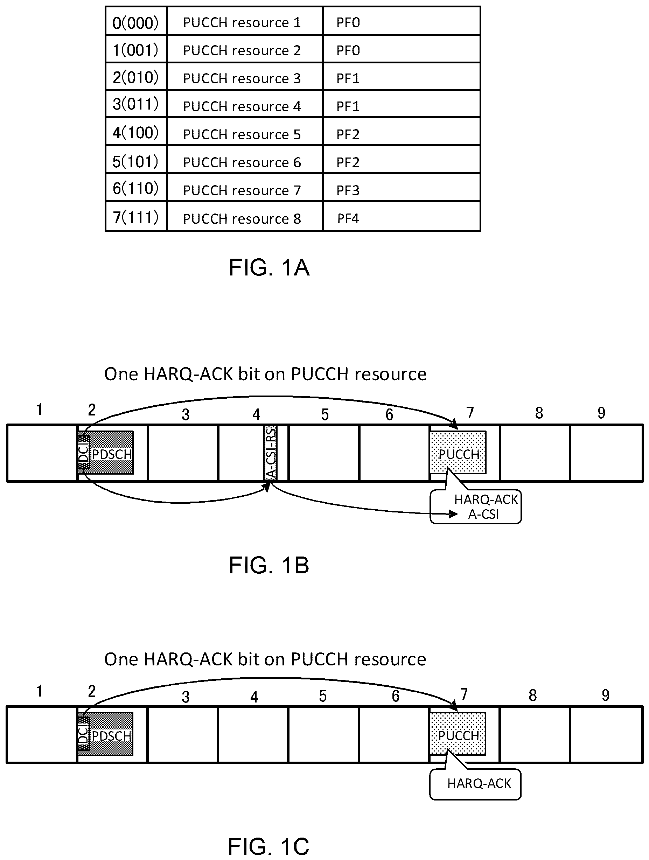

Figs. 1 (Figs. 1A, 1B, and 1C) are conceptual diagrams illustrating an example of triggering of the A-CSI reporting based on the PUCCH resource identifier.

Fig. 1A illustrates an example of the PUCCH resource set including the PUCCH resource identifier included in the DCI. The PUCCH resource identifier may be associated with at least one of the PUCCH resource and a PUCCH format (PF). This correspondence relationship may be configured in the UE, using higher layer signaling, for example.

The above-described correspondence relationship in Fig. 1A is as follows:
PUCCH resource identifier 0(000): PUCCH resource 1 and PF0
PUCCH resource identifier 1(001): PUCCH resource 2 and PF0
PUCCH resource identifier 2(010): PUCCH resource 3 and PF1
PUCCH resource identifier 3(011): PUCCH resource 4 and PF1
PUCCH resource identifier 4(100): PUCCH resource 5 and PF2
PUCCH resource identifier 5(101): PUCCH resource 6 and PF2
PUCCH resource identifier 6(110): PUCCH resource 7 and PF3
PUCCH resource identifier 7(111): PUCCH resource 8 and PF4

In this manner, one PUCCH resource set may include eight PUCCH resources of the PUCCH resources 1 to 8 and five PUCCH formats of the PUCCH formats 0 to 4. Such PUCCH resource set may be used, for example, for PUCCH transmission of URLLC (for example, HARQ-ACK transmission to URLLC PDSCH).

Note that, in the NR, it is so far studied that one PUCCH resource set is associated with the PUCCH formats 0 and 1 or with PUCCH formats 2, 3 and 4, and it is not assumed that one PUCCH resource set is associated with the PUCCH formats 0 to 4.

When receiving the DCI on the PDCCH and receiving the DL data on the PDSCH, the UE transmits the HARQ-ACK being a decoded result of the DL data to the base station. In this case, the UE may determine whether to perform the A-CSI reporting according to the PUCCH resource specified by the DCI, for example, according to the PUCCH resource identifier included in the DCI.

It is possible that the UE perform the A-CSI reporting in a case where a first PUCCH resource (PUCCH resource identifier) is specified as the PUCCH resource (PUCCH resource identifier), and this does not perform the A-CSI reporting in a case where a second PUCCH resource (PUCCH resource identifier) is specified.

The first PUCCH resource and the second PUCCH resource may be arbitrarily (freely) configured by notice by the higher layer signaling and the like. For example, the PUCCH resources 1 to 4 having former half numbers may be made the "first PUCCH resources", and the PUCCH resources 5 to 8 having latter half numbers may be made the "second PUCCH resources". Alternatively, the PUCCH resources 1, 3, 5, and 7 having odd numbers may be made the "first PUCCH resources", and the PUCCH resources 2, 4, 6, and 8 having even numbers may be made the "second PUCCH resources". Note that some or all of the resources included in one PUCCH resource set may be configured as the first PUCCH resource.

Fig. 1B illustrates an example of simultaneous transmission of the A-CSI reporting and HARQ-ACK based on the PUCCH resource identifier. In Fig. 1B, nine consecutive slots 1 to 9 are illustrated. The UE receives the DCI on the PDCCH and receives the DL data on the PDSCH in the slot 2. In this example, it is assumed that the UE transmits the HARQ-ACK corresponding to the PDSCH in the slot 7 based on the DCI.

The UE performs measurement of an A-CSI-RS in the slot 4 when the PUCCH resource (PUCCH resource identifier) specified by the DCI is the first PUCCH resource (PUCCH resource identifier). Furthermore, the UE generates (obtains, derives, determines) the A-CSI based on the measurement. Note that information regarding the A-CSI-RS being an A-CSI reporting target (for example, CSI resource configuration information) may be determined in advance by specification, or the UE may be notified of the same by the higher layer signaling and the like.

In the slot 7, the UE performs simultaneous transmission (PUCCH transmission) of the HARQ-ACK being the decoded result of the DL data on the PDSCH and the A-CSI described above to the base station using the first PUCCH resource. Herein, the HARQ-ACK and A-CSI may be transmitted as the UCI.

Fig. 1C illustrates an example of single transmission of the HARQ-ACK based on the PUCCH resource identifier. In Fig. 1C, nine consecutive slots 1 to 9 are illustrated. In the slot 2, the UE receives the DCI on the PDCCH and receives the DL data on the PDSCH.

When the PUCCH resource (PUCCH resource identifier) specified by the DCI is the second PUCCH resource (PUCCH resource identifier), the UE does not perform the measurement of the A-CSI based on the DCI. In the slot 7, the UE performs the single transmission (PUCCH transmission) of the HARQ-ACK being the decoded result of the DL data on the PDSCH to the base station using the second PUCCH resource described above (transmits the HARQ-ACK but does not transmit the A-CSI).

### <Aspect 2-1-2>

Herein, it is described on the assumption that the UE transmits the HARQ-ACK of up to two bits to the base station in a case where the PUCCH formats 0 and 1 are specified and the UE transmits the HARQ-ACK of more than two bits to the base station in a case where the PUCCH formats 2 to 4 are specified in a normal state in the PUCCH resource (PUCCH resource identifier) included in the DCI.

In other words, it is assumed that the PUCCH formats 0 and 1 are defined as the formats for the UCI (HARQ-ACK) of up to a given number of (for example, two) bits and the PUCCH formats 2 to 4 are defined as the formats for the UCI (HARQ-ACK) of more than the given number of bits.

In a case where the UE receives an instruction to transmit the HARQ-ACK inconsistent with the above assumption, this may measure the A-CSI-RS and transmit corresponding A-CSI reporting.

For example, the UE may transmit the A-CSI reporting (PUCCH transmission) together with the HARQ-ACK being the decoded result of the DL data on the PDSCH in a case of receiving an instruction to transmit the HARQ-ACK of more than two bits (or in a case where the HARQ-ACK transmitted on the PUCCH is more than two bits) even through the PUCCH formats 0 and 1 are specified in the PUCCH resource (PUCCH resource identifier) instructed by the DCI. It is also possible to omit the HARQ-ACK and transmit the A-CSI reporting (in place of the HARQ-ACK). Herein, the PUCCH resource for transmitting the A-CSI reporting (and the HARQ-ACK) may be determined in advance by the specification, or may be configured in the UE by the higher layer signaling and the like.

For example, the UE may transmit the A-CSI reporting (PUCCH transmission) together with the HARQ-ACK being the decoded result of the DL data on the PDSCH in a case of receiving an instruction to transmit the HARQ-ACK of up to two bits (or in a case where the HARQ-ACK transmitted on the PUCCH is up to two bits) even through the PUCCH formats 2 to 4 are specified in the PUCCH resource (PUCCH resource identifier) specified by the DCI. It is also possible to omit the HARQ-ACK and transmit the A-CSI reporting (in place of the HARQ-ACK). Herein, the PUCCH resource for transmitting the A-CSI reporting (and HARQ-ACK) may be the PUCCH resource instructed by the DCI, may be determined in advance by the specification, or may be configured in the UE by the higher layer signaling and the like.

The aspect 2-1-2 is described with reference to Fig. 1 described above. In the example in Fig. 1, the number of bits of the HARQ-ACK in the slot 7 is one. Therefore, in a case where the PUCCH resource 7 corresponding to PF3 is specified, for example, by the DCI in the slot 2, the UE performs the measurement of the A-CSI-RS and transmits the corresponding A-CSI reporting (and the HARQ-ACK described above) by using the PUCCH resource in the slot 7.

On the other hand, in a case where the PUCCH resource 1 corresponding to PF0 is specified, for example, by the DCI in the slot 2, the UE does not perform the measurement of the A-CSI-RS and does not perform the A-CSI reporting in the slot 7.

### <Aspect 2-1-3>

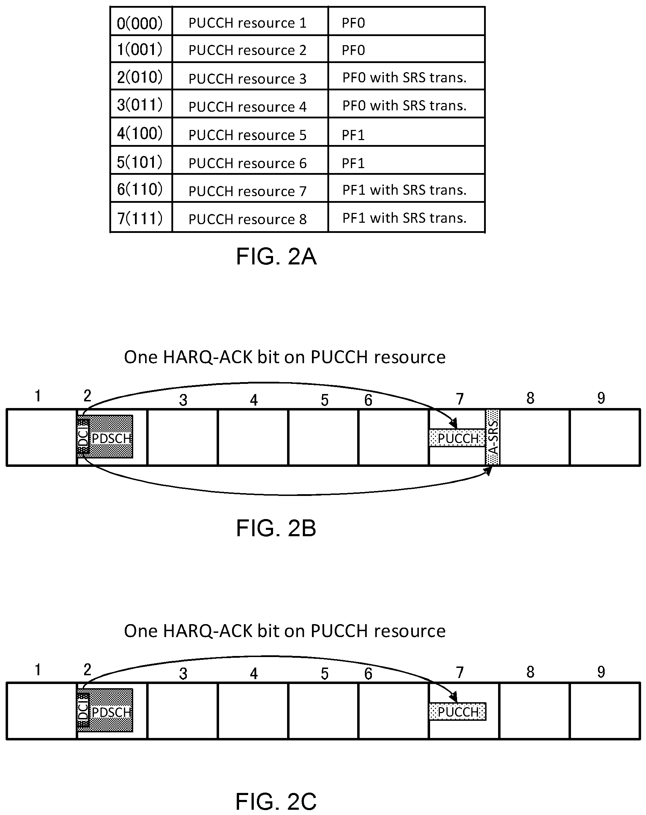

Figs. 2 (Figs. 2A, 2B, and 2C) are first conceptual diagrams illustrating an example of triggering of the A-SRS transmission based on the PUCCH resource identifier.

Fig. 2A illustrates an example of the PUCCH resource set including the PUCCH resource identifier included in the DCI. The PUCCH resource identifier may be associated with at least one of the PUCCH resource, PUCCH format, and presence or absence of the SRS transmission. This correspondence relationship may be configured in the UE, using higher layer signaling, for example.

The above-described correspondence relationship in Fig. 2A is as follows:
PUCCH resource identifier 0(000): PUCCH resource 1 and PF0
PUCCH resource identifier 1(001): PUCCH resource 2 and PF0
PUCCH resource identifier 2(010): PUCCH resource 3 and PF0
PUCCH resource identifier 3(011): PUCCH resource 4 and PF0
PUCCH resource identifier 4(100): PUCCH resource 5 and PF1
PUCCH resource identifier 5(101): PUCCH resource 6 and PF1
PUCCH resource identifier 6(110): PUCCH resource 7 and PF1
PUCCH resource identifier 7(111): PUCCH resource 8 and PF1

In this manner, one PUCCH resource set may include eight PUCCH resources of the PUCCH resources 1 to 8 and two PUCCH formats of the PUCCH formats 0 and 1. Such PUCCH resource set may be used, for example, for PUCCH transmission of URLLC (for example, HARQ-ACK transmission to URLLC PDSCH).

In the example in Fig. 2A, out of the PUCCH resources 1 to 8 of the PUCCH resource set, triggering of the A-SRS transmission is associated with the PUCCH format 0 of the PUCCH resources 3 and 4 and the PUCCH format 1 of the PUCCH resources 7 and 8 (PF0 with SRS trans and PF1 with SRS trans). On the other hand, out of the PUCCH resources 1 to 8 of the PUCCH resource set, the triggering of the A-SRS transmission is not associated with the PUCCH format 0 of the PUCCH resources 1 and 2 and the PUCCH format 1 of the PUCCH resources 5 and 6.

Fig. 2B illustrates an example of a case of transmitting the A-SRS and the HARQ-ACK based on the PUCCH resource identifier in the same slot. In Fig. 2B, nine consecutive slots 1-9 are illustrated. The UE receives the DCI on the PDCCH and receives the DL data on the PDSCH in the slot 2. In this example, it is assumed that the UE transmits the HARQ-ACK corresponding to the PDSCH in the slot 7 based on the DCI.

The UE may transmit (PUCCH transmission) the HARQ-ACK being the decoded result of the DL data on the PDSCH using any one of the above-described PUCCH resources 3, 4, 7, and 8 in the slot 7 and transmit the A-SRS in the same slot 7 when the PUCCH resource (PUCCH resource identifier) specified by the DCI is associated with the triggering of the A-SRS transmission (the PUCCH resources 3, 4, 7, and 8 in the example in Fig. 2A).

Fig. 2C illustrates an example in a case of transmitting only the HARQ-ACK without performing the A-SRS transmission based on the PUCCH resource identifier. In Fig. 2C, nine consecutive slots 1-9 are illustrated. The UE receives the DCI on the PDCCH and receives the DL data on the PDSCH in the slot 2. In this example, it is assumed that the UE transmits the HARQ-ACK corresponding to the PDSCH in the slot 7 based on the DCI.

The UE may transmit (PUCCH transmission) to the base station only the HARQ-ACK being the decoded result of the DL data on the PDSCH using any one of the above-described PUCCH resources 1, 2, 5, and 6 in the slot 7 when the PUCCH resource (PUCCH resource identifier) specified by the DCI is not associated with the triggering of the A-SRS transmission (the PUCCH resources 1, 2, 5, and 6 in the example in Fig. 2A).

### <Aspect 2-1-4>

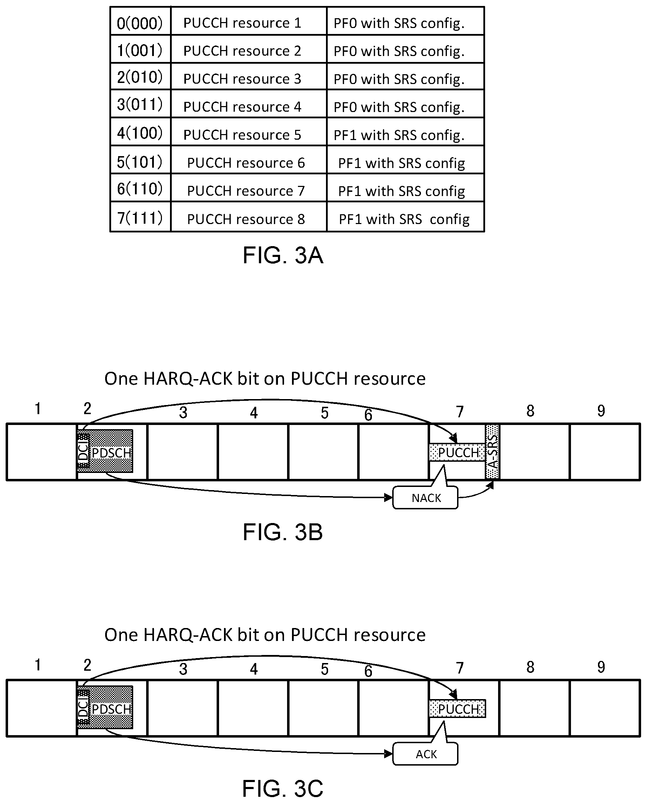

Figs. 3 (Figs. 3A, 3B, and 3C) are second conceptual diagrams illustrating an example of triggering of the A-SRS transmission based on the PUCCH resource identifier.

The PUCCH resource set in Fig. 3A is basically the same as the PUCCH resource set in Fig. 2A, but this is different in that "SRS config" is associated with all the PUCCH resources 1-8 (PUCCH format 0 and PUCCH format 1) in the PUCCH resource set (PF0 with SRS config, PF1 with SRS config). In this manner, at least one of the PUCCH resource, PUCCH format, and configuration regarding the SRS transmission (for example, SRS resource ID) may be associated with the PUCCH resource identifier. This correspondence relationship may be configured in the UE, using higher layer signaling, for example.

When receiving the DCI on the PDCCH and receiving the DL data on the PDSCH, the UE transmits the HARQ-ACK being a decoded result of the DL data to the base station. In this case, the UE may execute the A-SRS transmission in a case where at least one of the following conditions is satisfied.
- Case where the NACK or discontinuous transmission (DTX) is transmitted as the HARQ-ACK,
- case where the HARQ-ACK is associated with a new type RNTI (for example, RNTI indicating A-CSI trigger described later), and
- case where the HARQ-ACK is associated with the PDSCH associated with at least one of the MCS tables of the

### URLLC.

The A-SRS transmission and HARQ-ACK feedback (for example, NACK) may be executed in the same slot. Furthermore, the resource of the A-SRS transmission in the slot may be associated with the PUCCH resource by the upper layer parameter.

Fig. 3B illustrates an example of a case of transmitting the A-SRS and the HARQ-ACK based on the PUCCH resource identifier in the same slot. In Fig. 3B, nine consecutive slots 1-9 are illustrated. The UE receives the DCI on the PDCCH and receives the DL data on the PDSCH in the slot 2. In this example, it is assumed that the UE transmits the HARQ-ACK corresponding to the PDSCH in the slot 7 based on the DCI.

When the HARQ-ACK being the decoded result of the DL data is the NACK, the UE may transmit the NACK to the base station (PUCCH transmission) using any one of the above-described PUCCH resources 1 to 8 in the slot 7, and transmit the A-SRS in the same slot 7.

Fig. 3C illustrates an example of a case of transmitting only the HARQ-ACK without performing the A-SRS transmission based on the PUCCH resource identifier. In Fig. 3C, nine consecutive slots 1 to 9 are illustrated. The UE receives the DCI on the PDCCH and receives the DL data on the PDSCH in the slot 2. In this example, it is assumed that the UE transmits the HARQ-ACK corresponding to the PDSCH in the slot 7 based on the DCI.

When HARQ-ACK being the decoded result of the DL data is ACK, the UE may transmit (PUCCH transmission) only the ACK to the base station using any one of the above-described PUCCH resources 1 to 8 in the slot 7.

### <Aspect 2-2>

It is possible to control (trigger) the A-CSI reporting and A-SRS transmission using an aggregation level, for example, the aggregation level corresponding to the DCI. The aggregation level is an integration number of a given resource unit (for example, CCE) to which the PDCCH is mapped and may be configured to, for example, 1, 2, 4, 8, 16, and 32.

It is possible that the UE triggers the A-CSI reporting and A-SRS transmission in a case where the aggregation level corresponding to the detected DCI (for example, DL DCI) falls within a range of a given value (for example, 8 or larger) (AL ≥ 8) and this does not trigger the A-CSI reporting and A-SRS transmission in other cases (AL < 8). Note that the range of the given value that serves as a reference of whether to trigger the A-CSI reporting and A-SRS transmission is not limited to this (there is a degree of freedom), and may be changed to a range of other values (for example, 4 or larger, 4 or larger and smaller than 8 or the like).

The given value may be determined in advance by the specification, or may be configured in the UE by the higher layer signaling and the like.

### <Aspect 2-3>

It is possible to control (trigger) the A-CSI reporting and A-SRS transmission using a decoded result of UE data, for example, downlink data corresponding to the DCI.

In a case where decoding of the downlink data is failed, the UE may transmit the NACK as delivery acknowledgment information for notifying of the failure, and the A-CSI reporting and A-SRS transmission to the base station.

In a case where the decoding of the downlink data is failed, the A-CSI reporting and A-SRS transmission may be transmitted to the base station. In this case, the A-CSI reporting and A-SRS transmission implicitly indicate the NACK, and it is not necessary to transmit the NACK separately, so that the decrease in signaling overhead may be achieved.

In a case where the decoding of the downlink data is successful, it is possible that only the ACK as the delivery acknowledgement information for notifying of the success is transmitted and the A-CSI reporting and A-SRS transmission are not performed. That is, successful decoding of the downlink data means that the channel state is excellent, so that there is no need to perform the A-CSI reporting and A-SRS transmission. Note that the UE may transmit the ACK and the A-CSI reporting and A-SRS transmission to the base station, or may transmit the A-CSI reporting and A-SRS transmission in place of the ACK.

Note that the higher layer signaling and the like may configure whether the A-CSI reporting and A-SRS transmission may be transmitted in place of the NACK (or ACK) in the UE.

### <Aspect 2-4>

In a case where the UE transmits a scheduling request (SR) to the base station, the SR and the A-CSI reporting and A-SRS may be transmitted to the base station. Since transmission of the SR by the UE to the base station may be regarded as an indication of intention to perform certain data communication from now on, the A-CSI reporting and A-SRS transmission may be performed using the SR transmission as a trigger.

In a case where there is the SR (positive SR), the A-CSI reporting and A-SRS transmission may be transmitted to the base station without transmitting the SR. In this case, the A-CSI reporting and A-SRS transmission implicitly indicate that there is the SR (positive SR), and it is not necessary to transmit the SR separately, so that it is possible to achieve the decrease in signaling overhead.

In the aspect 2-4, information on whether the UE should transmit the SR to the base station (a concept different from that whether the SR is actually transmitted) corresponds to "information other than" the existing trigger information regarding the A-CSI and A-SRS.

### <Aspect 2-5>

The UE may perform the A-CSI reporting and A-SRS transmission in a case where at least one of semi-persistent scheduling (SPS) and configured grant type2 transmission is activated.

In the aspect 2-5, information on whether at least one of the semi-persistent scheduling (SPS) and configured grant type2 transmission is activated corresponds to "information other than" the existing trigger information regarding the A-CSI and A-SRS.

### <Aspect 3-1>

The DL DCI may be provided with a non-conventional completely new field that indicates whether to execute (trigger) the A-CSI reporting and A-SRS transmission. In this case, the information indicated in the completely new field of the DL DCI corresponds to "information other than" the existing trigger information regarding the A-CSI and A-SRS.

The UE executes (triggers) the A-CSI reporting and A-SRS transmission in a case where the information indicated in the completely new field of the DL DCI is a given value (for example, "1"), but this does not have to execute (trigger) the A-CSI reporting and A-SRS transmission in a case where the information indicated in the completely new field of the DCI is not a given value (for example, "0"). Note that the UE may transmit the A-CSI reporting triggered in this manner using the PUCCH.

### <Aspect 3-2>

It is possible to control (trigger) the A-CSI reporting and A-SRS transmission using one or a plurality of information fields included in the DL DCI. For example, the information field of the DL DCI includes various types of bit information such as an MCS field, a redundancy version (RV) field, and a HARQ process number field.

The UE executes (triggers) the A-CSI reporting and A-SRS transmission in a case where a bit value of one or a plurality of specific information fields out of the information fields is a given value (for example, all values are "1"), but this does not have execute (trigger) the A-CSI reporting and A-SRS transmission in a case where the bit value of the information fields is not a given value (for example, all values are not "1"). The UE may transmit the A-CSI reporting triggered in this manner using the PUCCH.

### <Aspect 3-3>

A non-conventional completely new RNTI (for example, also called as A-CSI-RNTI, A-SRS-RNTI and the like) that indicates whether to execute (trigger) the A-CSI reporting and A-SRS transmission may be introduced. In this case, the completely new RNTI corresponds to "information different from" the existing trigger information regarding the A-CSI and A-SRS". Note that the UE may transmit the A-CSI reporting triggered in this manner using the PUCCH.

### <Aspect 3-4>

It is possible to introduce a non-conventional completely new field that indicates whether to schedule PDSCH (DL-SCH) in the DL DCI. In this case, the information indicated in the completely new field of the DL DCI corresponds to "information other than" the existing trigger information regarding the A-CSI and A-SRS.

The UE executes (triggers) the A-CSI reporting and A-SRS transmission in a case of scheduling the PDSCH (DL-SCH) with the information indicated in the completely new field of the DL DCI, but this does not have to execute (trigger) the A-CSI reporting and A-SRS transmission in a case of not scheduling the PDSCH (DL-SCH) with the information indicated in the completely new field of the DL DCI.

By controlling (rapidly triggering) the A-CSI reporting and A-SRS transmission using "other information" according to the various aspects (variations) described above, it is possible to correctly grasp a channel condition and realize the radio communication method suitable for the ultra reliable and low latency URLLC service.

The configuration regarding the trigger of the A-CSI reporting and A-SRS transmission described above may be configured for each BWP or for each cell, for example.

### (Radio Communication System)

A configuration of a radio communication system according to one embodiment of the present disclosure is hereinafter described. In this radio communication system, communication is performed using any one of the radio communication methods according to the above-described embodiments of the present disclosure or a combination of them.

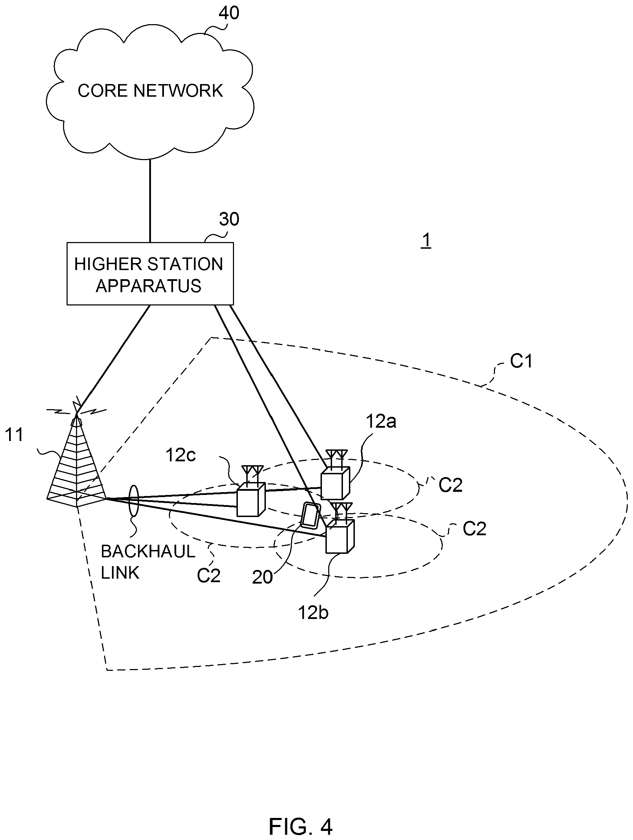

Fig. 4 is a view illustrating an example of a schematic configuration of the radio communication system according to one embodiment. At least one of carrier aggregation (CA) in which a plurality of fundamental frequency blocks (component carriers) in units of system bandwidth (for example, 20 MHz) are aggregated and dual connectivity (DC) may be applied to a radio communication system 1.

Note that the radio communication system 1 may be called as long term evolution (LTE), LTE-advanced (LTE-A), LTE-beyond (LTE-B), SUPER 3G, IMT-advanced, 4th generation mobile communication system (4G), 5th generation mobile communication system (5G), new radio (NR), future radio access (FRA), new-radio access technology (RAT) and the like, or may be called as a system to realize them.

Furthermore, the radio communication system 1 may support dual connectivity (multi-RAT dual connectivity (MR-DC)) between a plurality of radio access technologies

(RATs). The MR-DC may include dual connectivity (E-UTRA-NR dual connectivity (EN-DC)) of LTE and NR in which a base station (eNB) of LTE (E-UTRA) serves as a master node (MN) and a base station (gNB) of NR serves as a secondary node (SN), dual connectivity (NR-E-UTRA dual connectivity (NE-DC) of NR and LTE in which the base station (gNB) of NR serves as MN and the base station (eNB) of LTE (E-UTRA) serves as SN and the like.

The radio communication system 1 is provided with a base station 11 that forms a macro cell C1 of relatively wide coverage, and base stations 12 (12a to 12c) arranged in the macro cell C1 and form small cells C2 narrower than the macro cell C1. Furthermore, user terminal 20 is arranged in the macro cell C1 and in each small cell C2. The arrangement, number and the like of cells and pieces of user terminal 20 are not limited to those in an aspect illustrated in the drawings.

The user terminal 20 may be connected to both the base station 11 and base station 12. It is assumed that the user terminal 20 simultaneously uses the macro cell C1 and the small cell C2 using the CA or DC. Furthermore, the user terminal 20 may apply the CA or DC using a plurality of cells (CCs).

Between the user terminal 20 and the base station 11, communication may be performed using a carrier (an existing carrier, also called as a legacy carrier and the like) of a narrow bandwidth at a relatively low frequency band (for example, 2 GHz). In contrast, between the user terminal 20 and the base station 12, a carrier of a wide bandwidth at a relatively high frequency band (for example, 3.5 GHz, 5 GHz and the like) may be used, or the same carrier as that with the base station 11 may be used. Note that a configuration of the frequency band used by each base station is not limited to them.

Furthermore, in each cell, the user terminal 20 may perform communication using at least one of time division duplex (TDD) and frequency division duplex (FDD). Furthermore, in each cell (carrier), a single numerology may be applied, or a plurality of different numerologies may be applied.

The base station 11 and the base station 12 (or two base stations 12) may be connected to each other by wire (for example, an optical fiber compliant with common public radio interface (CPRI), an X2 interface and the like) or by radio.

The base station 11 and each base station 12 are connected to a higher station apparatus 30, and are connected to a core network 40 via the higher station apparatus 30. Note that the higher station apparatus 30 may include, for example, an access gateway apparatus, a radio network controller (RNC), a mobility management entity (MME) and the like, but is not limited to them. Furthermore, each base station 12 may be connected to the higher station apparatus 30 via the base station 11.

Note that the base station 11 is a base station having a relatively wide coverage, and may also be called as a macro base station, an aggregate node, an eNodeB (eNB), a transmission/reception point and the like. Furthermore, the base station 12 is a base station having local coverage, and may also be called as a small base station, a micro base stations, a pico base station, a femto base station, a Home eNodeB (HeNB), a remote radio head (RRH)", a transmission/reception point and the like. Hereinafter, in a case where the base stations 11 and 12 are not distinguished from each other, they are collectively called as base stations 10.

Each user terminal 20 is a terminal supporting various communication schemes such as LTE, LTE-A, and 5G, and may include not only a mobile communication terminal (mobile station) but also a stationary communication terminal (stationary station).

In the radio communication system 1, as a radio access scheme, orthogonal frequency division multiple access (OFDMA) is applied to a downlink, and at least one of single carrier-frequency division multiple access (SC-FDMA) and OFDMA is applied to an uplink.

The OFDMA is a multi-carrier transmission scheme to perform communication by dividing a frequency band into a plurality of narrow frequency bands (subcarriers) and mapping data to each subcarrier. The SC-FDMA is a single carrier transmission scheme to reduce an interference between terminals by dividing, for each terminal, a system bandwidth into bands formed of one or consecutive resource blocks, and allowing a plurality of terminals to use mutually different bands. Note that the uplink and downlink radio access schemes are not limited to a combination of them, and other radio access schemes may be used as well.

In the radio communication system 1, a physical downlink shared channel (PDSCH) shared by each user terminal 20, a physical broadcast channel (PBCH), a downlink control channel and the like are used as downlink channels. User data, higher layer control information, a system information block (SIB) and the like are transmitted on the PDSCH. Furthermore, a master information block (MIB) is transmitted on the PBCH.

The downlink control channel includes a physical downlink control channel (PDCCH), an enhanced physical downlink control channel (EPDCCH), a physical control format indicator channel (PCFICH), a physical hybrid-ARQ indicator channel (PHICH) and the like. Downlink control information (DCI) and the like including scheduling information of at least one of the PDSCH and PUSCH is transmitted on the PDCCH.

Note that the DCI that schedules DL data reception may be called as DL assignment, and the DCI that schedules UL data transmission may be called as UL grant.

The number of OFDM symbols used in the PDCCH may be transmitted on the PCFICH. Delivery acknowledgement information of hybrid automatic repeat request (HARQ) to the PUSCH (for example, also called as retransmission control information, HARQ-ACK, ACK/NACK and the like) may be transmitted on the PHICH. The EPDCCH is frequency-division-multiplexed with the PDSCH (physical downlink shared data channel) and used to transmit the DCI and the like as is the case with the PDCCH.

In the radio communication system 1, a physical uplink shared channel (PUSCH) shared by each user terminal 20, a physical uplink control channel (PUCCH), a physical random access channel (PRACH) and the like are used as uplink channels. User data, higher layer control information and the like are transmitted on the PUSCH. Furthermore, downlink channel quality indicator (CQI), delivery acknowledgement information, scheduling request (SR) and the like are transmitted on the PUCCH. A random access preamble for establishing connection with cells is transmitted on the PRACH.

In the radio communication system 1, a cell-specific reference signal (CRS), a channel state information-reference signal (CSI-RS), a demodulation reference signal (DMRS), a positioning reference signal (PRS) and the like are transmitted as downlink reference signals. Furthermore, in the radio communication system 1, a sounding reference signal (SRS), a demodulation reference signal (DMRS) and the like are transmitted as uplink reference signals. Note that the DMRS may also be called as a user terminal (UE)-specific reference signal". Furthermore, the reference signals to be transmitted are not limited to them.

### (Base Station)

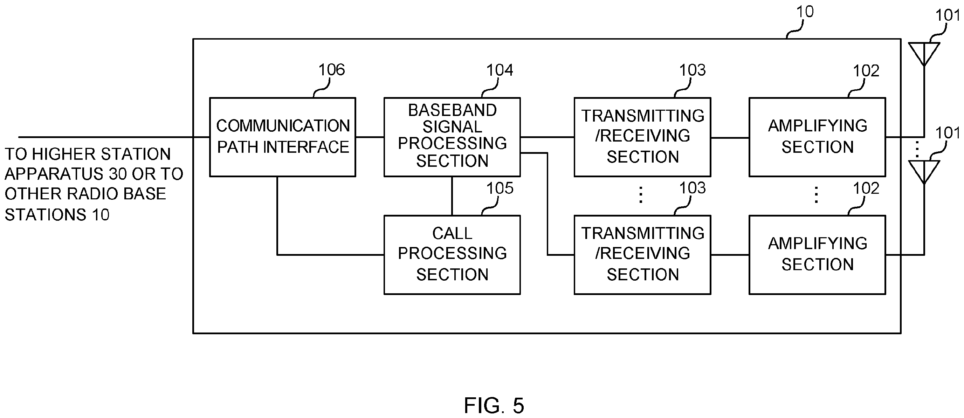

Fig. 5 is a view illustrating an example of an overall configuration of the base station according to one embodiment. The base station 10 is provided with a plurality of transmission/reception antennas 101, amplifying sections 102, transmitting/receiving sections 103, a base band signal processing section 104, a call processing section 105, and a transmission path interface 106. Note that one or more transmission/reception antennas 101, amplifying sections 102, transmitting/receiving sections 103 may be included.

The user data transmitted from the base station 10 to the user terminal 20 by the downlink is input from the higher station apparatus 30 to the base band signal processing section 104 via the transmission path interface 106.

In the base band signal processing section 104, the user data is subjected to transmission processing such as packet data convergence protocol (PDCP) layer processing, division and coupling of user data, RLC layer transmission processing such as radio link control (RLC) retransmission control, medium access control (MAC) retransmission control (for example, HARQ transmission processing), scheduling, transmission format selection, channel coding, inverse fast Fourier transform (IFFT) processing, and precoding processing to be forwarded to the transmitting/receiving section 103. Furthermore, a downlink control signal is also subjected to transmission processing such as channel coding and inverse fast Fourier transform to be forwarded to the transmitting/receiving section 103.

The transmitting/receiving section 103 converts a base band signal pre-coded to be output from the base band signal processing section 104 for each antenna into a radio frequency band to transmit. A radio frequency signal subjected to frequency conversion in the transmitting/receiving section 103 is amplified by the amplifying section 102 to be transmitted from the transmission/reception antenna 101. The transmitting/receiving section 103 may be formed of a transmitter/receiver, a transmission/reception circuit, or a transmission/reception apparatus described based on common recognition in the technical field to which the present disclosure pertains. Note that the transmitting/receiving section 103 may be formed as an integrated transmitting/receiving section, or may be formed as a transmitting section and a receiving section.

In contrast, as for uplink signals, a radio frequency signal received by the transmission/reception antennas 101 is amplified by the amplifying section 102. The transmitting/receiving section 103 receives the uplink signal amplified by the amplifying section 102. The transmitting/receiving section 103 performs frequency conversion on the reception signal to obtain the base band signal and outputs the same to the base band signal processing section 104.

The base band signal processing section 104 performs fast Fourier transform (FFT) processing, inverse discrete Fourier transform (IDFT) processing, error correction decoding, reception processing of MAC retransmission control, and reception processing of RLC and PDCP layers on the user data included in the input uplink signal, and forwards the same to the higher station apparatus 30 via the transmission path interface 106. The call processing section 105 performs call processing (such as configuration and release) of the communication channel, manages the state of the base station 10, and manages a radio resource.

The transmission path interface 106 transmits and receives signals to and from the higher station apparatus 30 via a given interface. Furthermore, the transmission path interface 106 may transmit and receive signals (backhaul signaling) with other base stations 10 via an inter-base station interface (for example, optical fiber compliant with the common public radio interface (CPRI), the X2 interface and the like).

The transmitting/receiving section 103 may receive and/or transmit various types of information described in the above-described embodiments from/to the user terminal 20.

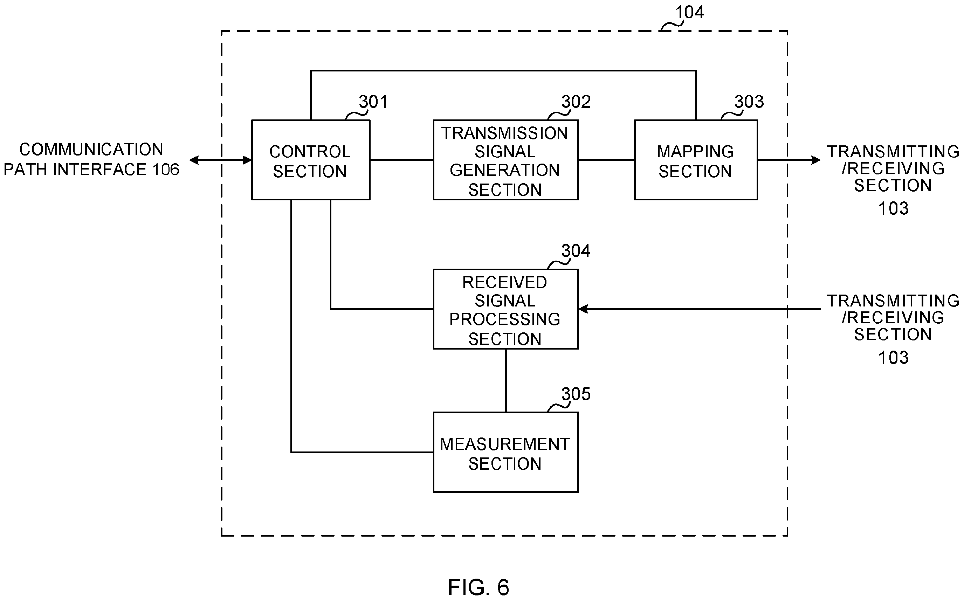

Fig. 6 is a view illustrating an example of a functional configuration of the base station according to one embodiment. Note that this example mainly illustrates a functional block of a characteristic portion in this embodiment, and it may be assumed that the base station 10 also includes other functional blocks necessary for radio communication.

The base band signal processing section 104 is at least provided with a control section (scheduler) 301, a transmission signal generating section 302, a mapping section 303, a reception signal processing section 304, and a measuring section 305. Note that it is only required that these configurations be included in the base station 10, and it is possible that some or all of the configurations are not included in the base band signal processing section 104.

The control section (scheduler) 301 controls an entire base station 10. The control section 301 may be formed of a controller, a control circuit, or a control apparatus described based on common recognition in the technical field to which the present disclosure pertains.

For example, the control section 301 controls generation of signals in the transmission signal generating section 302, allocation of signals in the mapping section 303 and the like. Furthermore, the control section 301 controls signal reception processing by the reception signal processing section 304, signal measurement by the measuring section 305 and the like.

The control section 301 controls scheduling (for example, resource allocation) of system information, a downlink data signal (for example, signal transmitted on the PDSCH), and a downlink control signal (for example, signal transmitted on the PDCCH and/or EPDCCH, such as delivery acknowledgement information). Furthermore, the control section 301 controls generation of the downlink control signal, downlink data signal and the like based on a result of judging whether the retransmission control to the uplink data signal is required and the like.

The control section 301 controls scheduling of the synchronization signal (for example, PSS/SSS), the downlink reference signal (for example, CRS, CSI-RS, and DMRS) and the like.

The control section 301 may perform control to form a Tx beam and/or a reception beam using digital BF (for example, precoding) by the base band signal processing section 104 and/or analog BF (for example, phase rotation) by the transmitting/receiving section 103.

The transmission signal generating section 302 generates downlink signals (downlink control signal, downlink data signal, downlink reference signal and the like) based on an instruction from the control section 301, and outputs the same to the mapping section 303. The transmission signal generating section 302 may be formed of a signal generator, a signal generation circuit, or a signal generation apparatus described based on common recognition in the technical field to which the present disclosure pertains.

Based on the instruction from the control section 301, for example, the transmission signal generating section 302 generates DL assignment that gives notice of downlink data allocation information, and/or UL grant that gives notice of uplink data allocation information. Both the DL assignment and UL grant are the DCI, and follow the DCI format. Furthermore, the downlink data signal is subjected to coding processing, modulation processing and the like according to a coding rate and modulation scheme determined based on channel state information (CSI) and the like from each user terminal 20.

The mapping section 303 maps the downlink signal generated by the transmission signal generating section 302 to a given radio resource, and outputs the same to the transmitting/receiving section 103 based on the instruction from the control section 301. The mapping section 303 may be formed of a mapper, a mapping circuit, or a mapping apparatus described based on common recognition in the technical field to which the present disclosure pertains.

The reception signal processing section 304 performs reception processing (for example, demapping, demodulation, decoding and the like) on the reception signal input from the transmitting/receiving section 103. Herein, the reception signal is, for example, the uplink signal transmitted from the user terminal 20 (uplink control signal, uplink data signal, uplink reference signal and the like). The reception signal processing section 304 may be formed of a signal processor, a signal processing circuit, or a signal processing apparatus described based on common recognition in the technical field to which the present disclosure pertains.

The reception signal processing section 304 outputs information decoded by the reception processing to the control section 301. For example, in a case where the PUCCH including the HARQ-ACK is received, the HARQ-ACK is output to the control section 301. Furthermore, the reception signal processing section 304 outputs the reception signal and/or the signal after the reception processing to the measuring section 305.

The measuring section 305 performs measurement regarding the received signal. The measuring section 305 may be formed of a measuring instrument, a measurement circuit, or a measurement apparatus described based on common recognition in the technical field to which the present disclosure pertains.

For example, the measuring section 305 may perform radio resource management (RRM) measurement, channel state information (CSI) measurement and the like based on the received signal. The measuring section 305 may measure received power (for example, reference signal received power (RSRP)), a received quality (for example, reference signal received quality (RSRQ), a signal to interference plus noise ratio (SINR), a signal to noise ratio (SNR)), signal strength (for example, received signal strength indicator (RSSI)), propagation path information (for example, CSI) and the like. A measurement result may be output to the control section 301.

### (User Terminal)

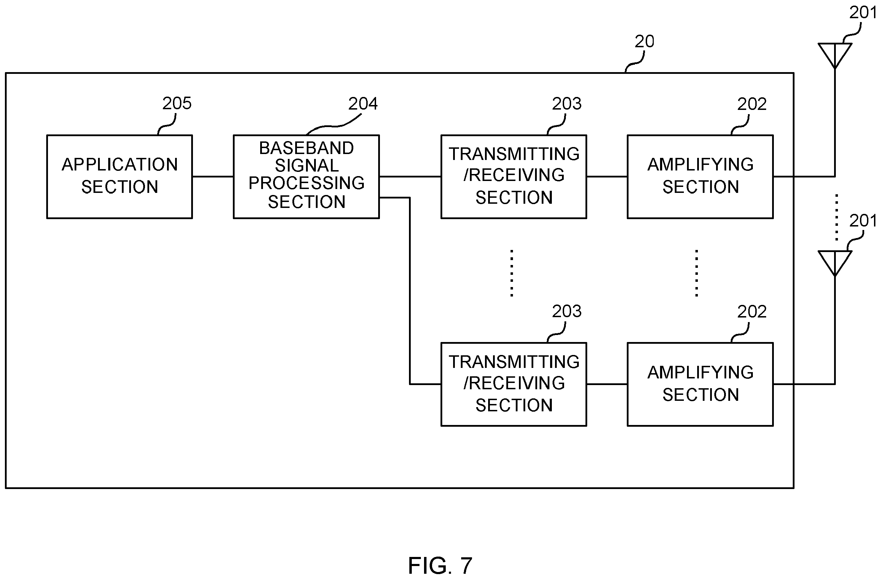

Fig. 7 is a view illustrating an example of an overall configuration of the user terminal according to one embodiment. The user terminal 20 is provided with a plurality of transmission/reception antennas 201, amplifying sections 202, and transmitting/receiving sections 203, a base band signal processing section 204, and an application section 205. Note that one or more transmission/reception antennas 201, amplifying sections 202, and transmitting/receiving sections 203 may be included.

A radio frequency signal received by the transmission/reception antenna 201 is amplified by the amplifying section 202. The transmitting/receiving section 203 receives a downlink signal amplified by the amplifying section 202. The transmitting/receiving section 203 performs frequency conversion on the reception signal into a base band signal, and outputs the same to the base band signal processing section 204. The transmitting/receiving section 203 may be formed of a transmitter/receiver, a transmission/reception circuit, or a transmission/reception apparatus described based on common recognition in the technical field to which the present disclosure pertains. Note that the transmitting/receiving section 203 may be formed as an integrated transmitting/receiving section, or may be formed as a transmitting section and a receiving section.

The base band signal processing section 204 performs FFT processing, error correction decoding, reception processing of retransmission control and the like on the input base band signal. Downlink user data is forwarded to the application section 205. The application section 205 performs processing regarding a layer higher than the physical layer and MAC layer. Furthermore, broadcast information out of the downlink data may be forwarded to the application section 205.

In contrast, uplink user data is input from the application section 205 to the base band signal processing section 204. This is subjected to retransmission control transmission processing (for example, HARQ transmission processing), channel coding, precoding, discrete Fourier transform (DFT) processing, IFFT processing and the like by the base band signal processing section 204, and forwarded to the transmitting/receiving section 203.

The transmitting/receiving section 203 converts the base band signal output from the base band signal processing section 204 into a radio frequency band to transmit. The radio frequency signal subjected to the frequency conversion by the transmitting/receiving section 203 is amplified by the amplifying section 202, and transmitted from the transmission/reception antenna 201.

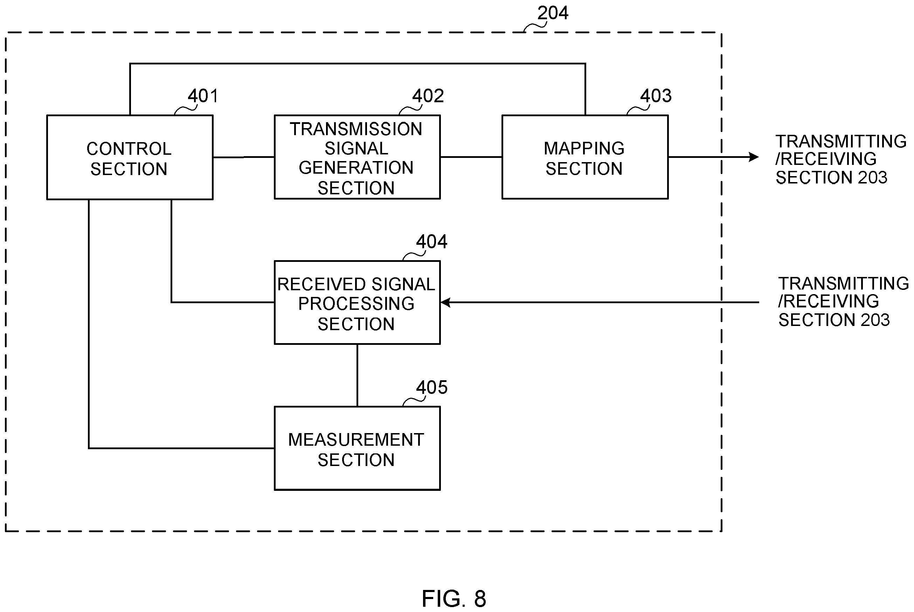

Fig. 8 is a view illustrating an example of a functional configuration of the user terminal according to one embodiment. Note that this example mainly illustrates a functional block of a characteristic portion in this embodiment, and it may be assumed that the user terminal 20 also includes other functional blocks necessary for radio communication.

The base band signal processing section 204 included in the user terminal 20 is at least provided with a control section 401, a transmission signal generating section 402, a mapping section 403, a reception signal processing section 404, and a measuring section 405. Note that it is only required that these configurations be included in the user terminal 20, and it is possible that some or all of the configurations are not included in the base band signal processing section 204.

The control section 401 controls entire user terminal 20. The control section 401 may be formed of a controller, a control circuit, or a control apparatus described based on common recognition in the technical field to which the present disclosure pertains.

The control section 401, for example, controls generation of signals in the transmission signal generating section 402, allocation of signals in the mapping section 403 and the like. Furthermore, the control section 401 controls signal reception processing by the reception signal processing section 404, signal measurement by the measuring section 405 and the like.

The control section 401 obtains the downlink control signal and downlink data signal transmitted from the base station 10 via the reception signal processing section 404. The control section 401 controls generation of uplink control signals and/or uplink data signal based on a result of judging whether retransmission control is necessary for the downlink control signal and/or downlink data signal and the like.

Furthermore, in a case where the control section 401 obtains various types of information notified by the base station 10 from the reception signal processing section 404, this may update a parameter used for control based on the information.

The transmission signal generating section 402 generates the uplink signals (uplink control signal, uplink data signal, uplink reference signal and the like) based on an instruction from the control section 401, and outputs the same to the mapping section 403. The transmission signal generating section 402 may be formed of a signal generator, a signal generation circuit, or a signal generation apparatus described based on common recognition in the technical field to which the present disclosure pertains.

For example, the transmission signal generating section 402 generates the uplink control signal regarding the delivery acknowledgement information, channel state information (CSI) and the like based on the instruction from the control section 401. Furthermore, the transmission signal generating section 402 generates the uplink data signal based on the instruction from the control section 401. For example, in a case where the UL grant is included in the downlink control signal notice of which is given by the base station 10, the transmission signal generating section 402 is instructed by the control section 401 to generate the uplink data signal.

The mapping section 403 maps the uplink signal generated by the transmission signal generating section 402 to the radio resource, and outputs the same to the transmitting/receiving section 203 based on the instruction from the control section 401. The mapping section 403 may be formed of a mapper, a mapping circuit, or a mapping apparatus described based on common recognition in the technical field to which the present disclosure pertains.

The reception signal processing section 404 performs reception processing (for example, demapping, demodulation, decoding and the like) on the reception signal input from the transmitting/receiving section 203. Herein, the reception signal is, for example, the downlink signal (downlink control signal, downlink data signal, downlink reference signal and the like) transmitted from the base station 10. The reception signal processing section 404 may be formed of a signal processor, a signal processing circuit, or a signal processing apparatus described based on common recognition in the technical field to which the present disclosure pertains. Furthermore, the reception signal processing section 404 may form a receiving section according to the present disclosure.

The reception signal processing section 404 outputs information decoded by reception processing to the control section 401. The reception signal processing section 404 outputs, for example, broadcast information, system information, RRC signaling, DCI and the like to the control section 401. Furthermore, the reception signal processing section 404 outputs the reception signal and/or the signal after the reception processing to the measuring section 405.

The measuring section 405 performs the measurement regarding the received signal. The measuring section 405 may be formed of a measuring instrument, a measurement circuit, or a measurement apparatus described based on common recognition in the technical field to which the present disclosure pertains.

For example, the measuring section 405 may perform RRM measurement, CSI measurement and the like based on the received signal. The measuring section 405 may measure regarding the received power (for example, RSRP), the received quality (for example, RSRQ, SINR, and SNR), the signal strength (for example, RSSI), propagation path information (for example, CSI) and the like. The measurement result may be output to the control section 401.

Note that the transmitting/receiving section 203 may transmit at least one of the channel state information (CSI) and sounding reference signal (SRS).

The control section 401 may control transmission of at least one of the channel state information and sounding reference signal based on information other than the existing trigger information regarding at least one of the channel state information and sounding reference signal.

The control section 401 may control transmission of at least one of the channel state information and sounding reference signal based on the PUCCH resource identifier included in the downlink control information.

It is possible that the control section 401 transmits at least one of the channel state information and sounding reference signal in a case where a first PUCCH resource identifier is specified as the PUCCH resource identifier, and this does not transmit the channel state information and sounding reference signal in a case where a second PUCCH resource identifier is specified.

The control section 401 may control transmission of at least one of the channel state information and sounding reference signal based on an aggregation level corresponding to the downlink control information.

The control section 401 may control the transmission of at least one of the channel state information and sounding reference signal based on the decoded result of the downlink data corresponding to the downlink control information.

Note that the "information other than the existing trigger information regarding at least one of the channel state information and sounding reference signal" may be at least one of the information indicating the PUCCH resource (for example, the PUCCH resource identifier included in the DCI), the aggregation level (for example, the aggregation level corresponding to the DCI), and the UE data (for example, the decoded result of the downlink data corresponding to the DCI) described above.

### (Hardware Configuration)

Note that the block diagram used to illustrate the above-described embodiments illustrate a function section block. These functional blocks (configuration sections) are realized by an arbitrary combination of at least one of hardware and software. Furthermore, a method for realizing each functional block is not especially limited. That is, each functional block may be realized using one physically or logically coupled apparatus, or may be realized by directly or indirectly connecting two or more physically or logically separate apparatuses (using wire, radio and the like, for example) and using the plurality of apparatuses. The functional block may be realized by combining the one or a plurality of apparatuses with software.

Herein, functions include, but are not limited to, determining, determining, judging, computing, calculating, processing, deriving, investigating, searching, confirming, receiving, transmitting, outputting, accessing, resolving, selecting, choosing, establishing, comparing, assuming, expecting, deeming, broadcasting, notifying, communicating, forwarding, configuring, reconfiguring, allocating, mapping, and assigning. For example, a functional block (configuration section) that causes transmission to function may be called as a transmitting section, a transmitter and the like. In any case, as described above, the method for realizing is not especially limited.

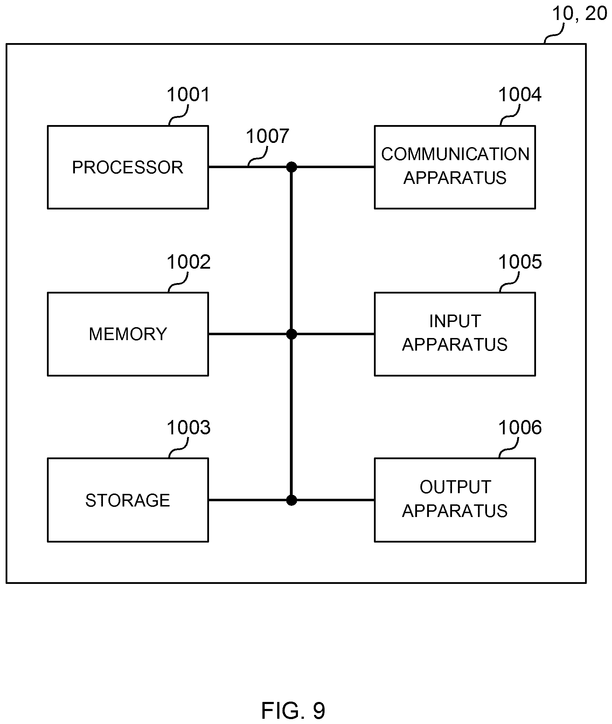

For example, the base station, the user terminal and the like according to one embodiment of the present disclosure may function as a computer that executes processing of the radio communication method of the present disclosure. Fig. 9 is a view illustrating an example of a hardware configuration of the base station and user terminal according to one embodiment. Physically, the above-described base station 10 and user terminal 20 may be formed as a computer apparatus including a processor 1001, a memory 1002, a storage 1003, a communication apparatus 1004, an input apparatus 1005, an output apparatus 1006, and a bus 1007.

Note that, in the present disclosure, terms such as apparatus, circuit, device, part, and section may be read as each other. A hardware configuration of the base station 10 and user terminal 20 may include one or a plurality of apparatuses illustrated in the drawing, or may be formed without a part of apparatus included.

For example, although only one processor 1001 is illustrated, there may be a plurality of processors. Furthermore, processing may be executed by one processor, or may be executed by two or more processors simultaneously, in sequence, or by using another method. Note that the processor 1001 may be implemented with one or more chips.

For example, each function of the base station 10 and user terminal 20 is realized by loading given software (program) on hardware such as the processor 1001 and memory 1002, so that the processor 1001 performs arithmetic operation to control communication via the communication apparatus 1004 and controls at least one of read and write of data from/to the memory 1002 and storage 1003.

The processor 1001 operates an operating system to control an entire computer, for example. The processor 1001 may be formed of a central processing unit (CPU) including an interface with peripheral terminal, a control apparatus, operational terminal, a register and the like. For example, the above-described base band signal processing section 104 (204), call processing section 105 and the like may be realized by the processor 1001.

Furthermore, the processor 1001 reads a program (program code), a software module, data and the like from at least one of the storage 1003 and communication apparatus 1004 into the memory 1002, and executes various types of processing according to them. As for the program, a program that allows the computer to execute at least a part of the operation described in the above-described embodiment may be used. For example, the control section 401 of the user terminal 20 may be realized by a control program stored in the memory 1002 to operate on the processor 1001, and other functional blocks may be similarly realized.

The memory 1002 is a computer-readable recording medium, and may be formed of, for example, at least one of a read only memory (ROM), an erasable programmable ROM (EPROM), an electrically EPROM (EEPROM), a random access memory (RAM) and other appropriate storage media. The memory 1002 may be called as a register, a cache, a main memory (primary storage) and the like. The memory 1002 may store a program (program code), a software module and the like executable for implementing the radio communication method according to one embodiment of the present disclosure.

The storage 1003 is a computer-readable recording medium, and may be formed of, for example, at least one of a flexible disk, a floppy (registered trademark) disk, a magneto-optical disk (for example, a compact disc (compact disc ROM (CD-ROM) and the like), a digital versatile disc, and a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be called as a secondary storage.

The communication apparatus 1004 is hardware (transmission/reception device) for performing inter-computer communication via at least one of a wired network and a radio network, and is also called as a network device, a network controller, a network card, a communication module and the like, for example. The communication apparatus 1004 may include a high frequency switch, a duplexer, a filter, a frequency synthesizer and the like in order to realize, for example, at least one of frequency division duplex (FDD) and time division duplex (TDD). For example, the above-described transmission/reception antenna 101 (201), amplifying section 102 (202), transmitting/receiving section 103 (203), transmission path interface 106 and the like may be realized by the communication apparatus 1004. The transmitting/receiving section 103 (203) may be implemented so as to be physically or logically separated into a transmitting section 103a (203a) and a receiving section 103b (203b).

The input apparatus 1005 is an input device that receives an input from outside (for example, a keyboard, a mouse, a microphone, a switch, a button, a sensor and the like). The output apparatus 1006 is an output device that outputs to the outside (for example, a display, a speaker, a light emitting diode (LED) lamp and the like). Note that the input apparatus 1005 and output apparatus 1006 may be integrated (for example, a touch panel).

Furthermore, each apparatus such as the processor 1001 and memory 1002 is connected by the bus 1007 for communicating information. The bus 1007 may be formed by using a single bus, or may be formed by using different buses for each apparatus.

Furthermore, the base station 10 and user terminal 20 may include hardware such as a microprocessor, a digital signal processor (DSP), an application specific integrated circuit (ASIC), a programmable logic device (PLD), and a field programmable gate array (FPGA), and a part or all of the functional blocks may be implemented using the hardware. For example, the processor 1001 may be implemented with at least one of these pieces of hardware.

### (Variations)

Note that the terms described in the present disclosure and the terms required to understand the present disclosure may be replaced with the terms having the same or similar meanings. For example, at least one of the channel and symbol may be the signal (signaling). Furthermore, the signal may be a message. The reference signal may be abbreviated as RS, and may be called as a pilot, a pilot signal and the like depending on an applied standard. Furthermore, a component carrier (CC) may be called as a cell, a frequency carrier, a carrier frequency and the like.

A radio frame may be formed of one or a plurality of periods (frames) in a time domain. Each of one or a plurality of periods (frames) forming the radio frame may be called as a subframe. Moreover, the subframe may be formed of one or a plurality of slots in the time domain. The subframe may have a fixed time length (for example, 1 ms) that does not depend on numerology.

Herein, the numerology may be a communication parameter applied to at least one of transmission and reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing to be performed by a transceiver in a frequency domain, specific windowing processing to be performed by the transceiver in the time domain and the like.

A slot may be formed of one or a plurality of symbols (orthogonal frequency division multiplexing (OFDM) symbols, single carrier frequency division multiple access (SC-FDMA) symbols and the like) in the time domain. Furthermore, the slot may be a time unit based on the numerology.

The slot may include a plurality of mini slots. Each mini slot may be formed of one or a plurality of symbols in the time domain. Furthermore, the mini slot may be called as a subslot. Each mini slot may be formed of fewer symbols than those of the slot. The PDSCH (or PUSCH) transmitted in a time unit larger than the mini slot may be called as a PDSCH (PUSCH) mapping type A. The PDSCH (or PUSCH) transmitted using the mini slot may be called as a PDSCH (PUSCH) mapping type B.

The radio frame, subframe, slot, mini slot, and symbol all represent a time unit when transmitting a signal. The radio frame, subframe, slot, mini slot, and symbol may be called by other corresponding names. Note that the time units such as the frame, subframe, slot, mini slot, and symbol in the present disclosure may be read as each other.

For example, one subframe may be called as a transmission time interval (TTI), or a plurality of consecutive subframes may be called as TTI, or one slot or one mini slot may be called as TTI. That is, at least one of the subframe and TTI may be the subframe (1 ms) in the existing LTE, may be a period shorter than 1 ms (for example, 1 to 13 symbols), or may be a period longer than 1 ms. Note that the unit indicating the TTI may be called as the slot, mini slot and the like instead of the subframe.

Herein, the TTI refers to the minimum time unit of scheduling in the radio communication, for example. For example, in the LTE system, the base station performs scheduling to allocate the radio resources (such as the frequency bandwidth and transmitted power that may be used in each user terminal) to each user terminal in TTI units. Note that definition of the TTI is not limited to this.

The TTI may be a transmission time unit of channel coded data packet (transport block), code block, codeword and the like, or may be a processing section of scheduling, link adaptation and the like. Note that when the TTI is given, a time interval (for example, the number of symbols) to which the transport block, code block, codeword and the like are actually mapped may be shorter than the TTI.

Note that, in a case where one slot or one mini slot is called as the TTI, one or more TTIs (that is, one or more slots or one or more mini slots) may be the minimum time unit of scheduling. Furthermore, the number of slots (the number of mini slots) forming the minimum time unit of the scheduling may be controlled.

The TTI having the time length of 1 ms may be called as a usual TTI (TTI in LTE Rel. 8 to 12), a normal TTI, a long TTI, a usual subframe, a normal subframe, a long subframe, a slot and the like. The TTI shorter than the usual TTI may be called as a shortened TTI, a short TTI, a partial TTI (or fractional TTI), a shortened subframe, a short subframe, a mini slot, a subslot, a slot and the like.

Note that the long TTI (for example, the usual TTI, subframe and the like) may be read as the TTI having the time length longer than 1 ms, and the short TTI (for example, the shortened TTI and the like) may be read as the TTI having the TTI length shorter than the TTI length of the long TTI and not shorter than 1 ms.

A resource block (RB) is a resource allocation unit of the time domain and frequency domain, and may include one or a plurality of consecutive subcarriers in the frequency domain. The number of subcarriers included in the RB may be the same regardless of the numerology, and may be 12, for example. The number of subcarriers included in the RB may be determined based on the numerology.

Furthermore, the RB may include one or a plurality of symbols in the time domain, and have the length of one slot, one mini slot, one subframe, or one TTI. One TTI, one subframe and the like may be formed of one or a plurality of resource blocks.

Note that one or a plurality of RBs may be called as a physical resource block (physical RB (PRB)), a subcarrier group (SCG), a resource element group (REG), a PRB pair, an RB pair and the like.

Furthermore, the resource block may be formed of one or a plurality of resource elements (REs). For example, one RE may be a radio resource domain of one subcarrier and one symbol.

A bandwidth part (BWP) (which may also be called as partial bandwidth and the like) may represent a subset of consecutive common resource blocks (RBs) for certain numerology in a certain carrier. Herein, the common RB may be specified by an RB index based on a common reference point of the carrier. The PRB may be defined in a certain BWP and numbered within the BWP.

The BWP may include a BWP for UL (UL BWP) and a BWP for DL (DL BWP). For the UE, one or a plurality of BWPs may be configured within one carrier.

At least one of the configured BWPs may be active, and it is not necessary to assume that the UE transmits or receives a given signal/channel outside the active BWP. Note that "cell", "carrier" and the like in the present disclosure may be read as "BWP".

Note that the structures of the radio frame, subframe, slot, mini slot, symbol and the like described above are merely examples. For example, configurations such as the number of subframes included in the radio frame, the number of slots per subframe or radio frame, the number of mini slots included in the slot, the number of symbols and RBs included in the slot or mini slot, the number of subcarriers included in the RB, and the number of symbols, the symbol length, and a cyclic prefix (CP) length in the TTI may be variously changed.

Furthermore, the information and parameters described in the present disclosure may be represented in absolute values, represented in relative values with respect to given values, or represented using other corresponding information. For example, the radio resource may be instructed by a given index.

The names used for the parameters and the like in the present disclosure are not limiting in any respect. Moreover, an equation and the like using these parameters may differ from that explicitly disclosed in the present disclosure. Since various channels (physical uplink control channel (PUCCH), physical downlink control channel (PDCCH) and the like) and information elements may be identified by any suitable names, the various names allocated to these various channels and information elements are not limiting in any respect.

The information, signals and the like described in the present disclosure may be represented using any of a variety of different technologies. For example, the data, instruction, command, information, signal, bit, symbol, chip and the like that may be referred to throughout the above-described description may be represented by the voltage, current, electromagnetic wave, magnetic field or magnetic particle, optical field or photon, or any combination of them.

Furthermore, the information, signal and the like may be output in at least one of a direction from the higher layer to a lower layer and a direction from the lower layer to the higher layer. The information, signal and the like may be input and output via a plurality of network nodes.

The information, signal and the like that are input/output may be stored in a specific location (for example, in a memory), or may be managed using a control table. The information, signal and the like that are input/output may be overwritten, updated, or edited. The output information, signal and the like may be deleted. The input information, signal and the like may be transmitted to other apparatuses.

Notice of information is not limited to the aspects/embodiments described in the present disclosure, and may be given using other methods. For example, notice of information may be given by physical layer signaling (for example, downlink control information (DCI) and uplink control information (UCI)), higher layer signaling (for example, radio resource control (RRC) signaling, broadcast information (master information block (MIB), a system information block (SIB) and the like), medium access control (MAC) signaling), and other signals and/or combinations of them.

Note that the physical layer signaling may be called as Layer 1/Layer 2 (L1/L2) control information (L1/L2 control signal), L1 control information (L1 control signal) and the like. Furthermore, the RRC signaling may be called as an RRC message, and may be, for example, an RRC connection setup message, an RRC connection reconfiguration message and the like. Furthermore, notice of the MAC signaling may be given by using, for example, a MAC control element (MAC CE).

Furthermore, notice of given information (for example, notice of "being X") does not necessarily have to be explicit, and may be implicit (for example, by not giving notice of the given information or by notice of other information).

Judgment may be performed by a one-bit value (0 or 1), by a boolean indicated by true or false, or by comparison of numerical values (for example, comparison with a given value).

Regardless of whether software is called as software, firmware, middleware, microcode or hardware description language, or called by other names, this should be interpreted broadly, to mean an instruction, an instruction set, a code, a code segment, a program code, a program, a subprogram, a software module, an application, a software application, a software package, a routine, a subroutine, an object, an executable file, an execution thread, a procedure, a function and the like.

Furthermore, the software, instruction, information and the like may be transmitted and received via communication media. For example, in a case where software is transmitted from a website, a server, or other remote sources using at least one of wired technology (coaxial cable, optical fiber cable, twisted-pair, digital subscriber line (DSL) and the like) and radio technology (infrared radiation, microwave and the like), at least one of these wired technology and radio technology is included in the definition of transmission media.

The terms "system" and "network" used in the present disclosure may be used interchangeably.

In the present disclosure, the terms such as "precoding", "precoder", "weight (precoding weight)", "quasi-co-location (QCL)", "transmission configuration indication state (TCI state)", "spatial relation", "spatial domain filter", "transmitted power", "phase rotation", "antenna port", "antenna port group", "layer", "number of layers", "rank", "resource", "resource set", "resource group", "beam", "beam width", "beam angle", "antenna", "antenna element", and "panel" may be used interchangeably.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier" may be used interchangeably. The base station may also be called by a term such as a macro cell, a small cell, a femto cell, a pico cell and the like.

The base station may accommodate one or a plurality of (for example, three) cells. When the base station accommodates a plurality of cells, an entire coverage area of the base station may be partitioned into a plurality of smaller areas, and each smaller area may provide a communication service through a base station subsystem (for example, indoor small base station (remote radio head (RRH)). The term "cell" or "sector" refers to all or part of the coverage area of at least one of the base station and base station subsystem that provides the communication service within this coverage.

In the present disclosure, the terms "mobile station (MS)", "user terminal", "user terminal (UE)", "terminal" and the like may be used interchangeably.

A mobile station may be called as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms.

At least one of the base station and mobile station may be called as a transmission apparatus, a reception apparatus, a wireless communication apparatus and the like. Note that at least one of the base station and mobile station may be a device mounted on a moving body, a moving body itself and the like. The moving body may be a transportation (for example, a car, an airplane and the like), an unmanned moving body (for example, a drone, an autonomous car and the like), or a (manned or unmanned) robot. Note that at least one of the base station and mobile station also includes an apparatus that does not necessarily move during a communication operation. For example, at least one of the base station and mobile station may be an Internet of Things (IoT) device such as a sensor.

Furthermore, the base station in the present disclosure may be read as the user terminal. For example, each aspect/embodiment of the present disclosure may be applied to a configuration in which communication between the base station and user terminal is replaced with communication between a plurality of pieces of user terminal (which may be called as, for example, device-to-device (D2D), vehicle-to-everything (V2X) and the like). In this case, the user terminal 20 may have the function of the base station 10 described above. Furthermore, terms such as "uplink" and "downlink" may be read as a term corresponding to communication between terminals (for example, "side"). For example, an uplink channel and a downlink channel may be read as a side channel.

Similarly, the user terminal in the present disclosure may be read as a base station. In this case, the base station 10 may have the function of the user terminal 20 described above.

Certain operations described in the present disclosure to be performed by the base station may, in some cases, be performed by their upper nodes. In a network including one or a plurality of network nodes including the base station, it is clear that various operations performed so as to communicate with terminals may be performed by the base station, one or more network nodes other than the base station (for example, mobility management entity (MME), serving-gateway (S-GW) and the like are considered, but there is no limitation), or a combination of them.

Each aspect/embodiment described in the present disclosure may be used alone, used in a combination, and switched in association with execution. Furthermore, the procedure, sequence, flowchart and the like of each aspect/embodiment described in the present disclosure may be re-ordered as long as inconsistencies do not arise. For example, regarding the method described in the present disclosure, elements of various steps are presented using an illustrative order, and this is not limited to the presented specific order.

Each aspect/embodiment described in the present disclosure may be applied to a system using long term evolution (LTE), LTE-advanced (LTE-A), LTE-beyond (LTE-B), SUPER 3G, IMT-advanced, 4th generation mobile communication system (4G), 5th generation mobile communication system (5G), future radio access (FRA), new radio access technology (New-RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate radio communication methods, and a next generation system expanded based on them. Furthermore, a plurality of systems may be combined to be applied (for example, a combination of LTE or LTE-A and 5G).

The term "based on" as used in the present disclosure does not mean "based only on" unless otherwise specified. In other words, the term "based on" means both "based only on" and "based at least on."

Reference to elements with designations such as "first", "second" and the like as used in the present disclosure does not generally limit the quantity or order of these elements. These designations may be used in the present disclosure as a convenient method for distinguishing between two or more elements. Therefore, the reference to the first and second elements does not mean that only two elements may be adopted, or that the first element must precede the second element in a certain manner.

The term "determining" as used in the present disclosure might contain a wide variety of operations. For example, "determining" may be regarded as "determining" of judging, calculating, computing, processing, deriving, investigating, looking up, search, inquiry (for example, looking up in a table, database, or another data structure), ascertaining and the like.

Furthermore, "determining" may be regarded as "determining" of receiving (for example, receiving of information), transmitting (for example, transmitting of information), input, output, accessing (for example, accessing to data in a memory) and the like.

Furthermore, "determining" may be regarded as "determining" of resolving, selecting, choosing, establishing, comparing and the like. In other words, "determining" may be regarded as "determining" of a certain operation.

Furthermore, "determining" may be read as "assuming", "expecting", "considering" and the like.

The terms "connected" and "coupled" as used in the present disclosure or any variation of these terms mean all direct or indirect connection or coupling between two or more elements, and may include presence of one or more intermediate elements between the two "connected" or "coupled" elements. The coupling or connection between the elements may be physical, logical, or a combination of them. For example, "connection" may be read as "access".

In the present disclosure, in a case where two elements are connected to each other, they may be considered to be "connected" or "coupled" to each other by using one or more electrical wires, cables, printed electrical connection and the like, and, as some nonlimiting and non-inclusive examples, by using electromagnetic energy having wavelengths in a radio frequency domain, a microwave domain, an optical (both visible and invisible) domain and the like.

In the present disclosure, the phrase "A and B are different" may mean "A and B are different from each other". Note that the phrase may mean that "A and B are different from C". The terms such as "separated" and "coupled" may be interpreted as "different".

In a case where "include", "including", and variations of them are used in the present disclosure, these terms are intended to be inclusive, in a manner similar to that of the term "comprising". Moreover, the term "or" as used in the present disclosure is intended to be not an exclusive-OR.

In the present disclosure, in a case where article, such as "a", "an", and "the" are added in English translation, the present disclosure may include the plural forms of nouns that follow these articles.

Although the invention according to the present disclosure has been described in detail above, it is obvious to a person skilled in the art that the invention according to the present disclosure is not limited to the embodiment described in the present disclosure. The invention according to the present disclosure may be carried out as correction and modified aspect without departing from the spirit and scope of the invention defined based on the recitation in claims. Consequently, the description in the present disclosure is provided only for the purpose of explaining examples, and should by no means be construed to limit the invention according to the present disclosure in any way.

## Claims

1. User terminal comprising:
a transmitting section that transmits at least one of channel state information and a sounding reference signal; and
a control section that controls transmission of at least one of the channel state information and the sounding reference signal based on information other than existing trigger information regarding at least one of the channel state information and the sounding reference signal.

2. The user terminal according to claim 1,
wherein the control section controls the transmission of at least one of the channel state information and the sounding reference signal based on a PUCCH resource identifier included in downlink control information.

3. The user terminal according to claim 2,
wherein the control section transmits at least one of the channel state information and the sounding reference signal in a case where a first PUCCH resource identifier is specified as the PUCCH resource identifier, and does not transmit the channel state information and the sounding reference signal in a case where a second PUCCH resource identifier is specified.

4. The user terminal according to claim 1,
wherein the control section controls the transmission of at least one of the channel state information and the sounding reference signal based on an aggregation level corresponding to the downlink control information.

5. The user terminal according to claim 1,
wherein the control section controls the transmission of at least one of the channel state information and the sounding reference signal based on a decoded result of downlink data corresponding to downlink control information.

6. A radio communication method of user terminal comprising:
a step of transmitting at least one of channel state information and a sounding reference signal; and
a step of controlling transmission of at least one of the channel state information and the sounding reference signal based on information other than existing trigger information regarding at least one of the channel state information and the sounding reference signal.
